# EUROPEAN PATENT APPLICATION

(11) **EP 2 172 897 A1**
(43) Date of publication of application: **07.04.2010**
(21) Application number: 08305596.2
(22) Date of filing: 25.09.2008
(51) Int. Cl.: G06Q 30/00

(54) **Improvements in or relating to the management of e-tickets**

(71) Applicant: Amadeus, 06902 Sophia Antipolis Cedex (FR)
(72) Inventor: Claverie, Beatrice, 06000, Nice (FR); Arnaud, Romain, 06130, Grasse (FR); Peteuil Bastien, 06600, Antibes (FR)
(74) Representative: Coret, Sophie V.G.A.

(57) **Abstract**

A method and system of managing a sales quota for the sale of one or more services or products, by an agent for a supplier, to ensure the agent does not surpass a first predetermined limit based on a criterion associated with the sales, the method comprising: measuring the sales of the service or product by the agent during a first predetermined time period; computing associated statistical indicators from the sales measures; and determining a sales quota for the agent to apply during a second predetermined time period, the sales quota being based on the statistical indicators and one or more airline business rules, to enable management of the sales of the agent without the sales surpassing the first predetermined limit.

## Description

### Field of the Invention

This invention relates to a method and system for managing electronic document issuance and particularly, but not exclusively, to a method and system related to electronic ticket quota management, in the transportation environment, such as, for example, the commercial airline industry.

### Background of the invention

In the transportation environment, and more particularly the airline industry, there are many issues being faced by the industry today. In recent months ticketing has been transitioning to e-ticketing particularly for travel agents. The tickets for an airline journey trip or leg are generally issued by the airline and distributed to travel agents or other sellers for sale to a client or traveler. Often the airline issues tickets to a travel agent and may find difficulty in recovering the money for the tickets due to fraudulent practices. This is due to the short timeframes for selling and the fact that many travel agents are going out of business due to the upsurge of online ticket purchasing and other factors.

Fraud related loss has increased five fold since 2000 with estimated loss across the industry at about $600M. On average, each airline suffered at least $3M of this type of fraud in 2006. External fraud (through travel agent distribution) is far greater than internal fraud (in Airline Travel Office/City Travel Office (ATO/CTO)). It is also acknowledged that about 99% of technology fraud relates to poor IT security.

Most airlines have no anti-fraud programs, do not perform risk assessments and do not track or record fraud. The best way to address fraud is to increase IT security, to set up checks, and to monitor all sales.

Clearly the airline industry is interested in resolving or improving this and similar problems. There is thus a need to effectively manage the control of e-tickets and the recovery of any payment thereof.

A method to attempt to control this has been set in place by bodies such as, for example, the International Association of Travel Agents (IATA) by means of a billing settlement plan (BSP). The BSP is the owner of paper ticket stock (as in a bank owning checks) and is in control of this stock for a specific market. There is generally one BSP per market. In the US, rules are not handled by IATA but by the ATA and the ARC corporations. The method to control the problem deals with the rules and regulations associated with a travel agent being accredited by IATA. One such rule is the requirement for a travel agent to pay a deposit at startup. Then, by use of a billing and settlement plan (BSP) the monies for tickets are settled once or twice a month between the travel agent and the validating airline.

The validating airline is a commonly used term in the industry and may also be referred to as the issuing airline or the "plating" airline. The issuing airline may be responsible for tickets from a number of airlines (socalled participating airlines) for a complex trip including a number of legs (known as interline situations). As a consequence, the issuing airline may be required to carry a substantial commitment in terms of monies owed.

This is a result of delays in payment, as the validating airline is billed by the participating airlines for the money due corresponding to their leg before the validating airline has been paid.

In the event that a travel agent is unable to settle any payments through the BSP, the airline has no alternative but to take responsibility for the debt. This can be a particular problem if a travel agent behaves in an abnormal or suspicious manner and for instance "sells" many more tickets than usual just before becoming bankrupt. This is known as a "burst ticketing" situation.

Currently a Ticket Quota System is used by airlines and the BSP to monitor, and in certain instances limit, the issuance of tickets (or other documents) when a specified quota is met. This quota may originate from the airline or the BSP and be passed to a Global Distribution System (GDS) hosting the travel agent. The ticket quota for each travel agent is stored by means of reference to an IATA reference for the travel agent. The quotas are set and adjusted by means of a GDS at the request of the airline or BSP. This is a very slow and burdensome process in which official requests are initiated and recorded electronically to be treated internally by each GDS. Currently only a limited number of airlines (maximum 10) can have a quota set for a given travel agent.

The Ticket Quota System constitutes an indirect method to monitor and manage quotas as it was originally designed for BSPs and for paper ticket monitoring. This system is very limited and does not suit today's airline needs as there is no direct access, no multi-GDS, no "amount quotas", no notifications, no display of history, no detection in real-time of burst ticketing situations, no trend analysis reports creation, etc.

US 7,069184 (Spirit Communications) discloses a general system for watching an application, comparing the activity of the application with thresholds, and triggering events when abnormal situations are detected. This document aims at monitoring software rather than at watching the working of a plurality of physical resources, and uses the term of statistics in the monitoring action. However, the statistics presented in US 7,069184 are a report about the current activity of the application and include no historical information about the activity of the application or trends associated therewith.

US 2005 238153 (IBM) discloses a method for computing a quota of service time or volume. A continuous monitoring action and comparison are performed by this application. The business application is quite specific and concerns financial amounts or money reserves.

Not all the problems associated with ticket quota management are solved by the prior art and a need exists to address the outstanding problems.

### Summary of the invention

One object of the present invention is to overcome at least some of the problems associated with the prior art.

An object of the present invention is to provide a system and methods capable of guaranteeing the revenues to transportation companies (such as airline companies when they are acting as a "validating" supplier for interline journeys) at an early stage, and particularly during the issuance of electronic tickets, against fraudulent travel agent sales.

A further object of the present invention is to overcome at least some of the problems associated with the prior art and particularly checking, in real-time, not only the number of electronic documents requested for issuance (against a "number quota"), but also the document value (against a "value quota"). The present invention also provides an online interface allowing the validating airline to monitor in real-time quotas and parameters. All electronic documents hosted in a validating airline Electronic Ticket Server (ETS) are potentially candidates for quota management (on more than one GDS). The airline can permit only a subset of electronic documents to be auditable by means of airline business rules.

Another object of the present invention is to provide a system and method which effectively manages quotas by tracking and monitoring trends and characteristics of ticket selling travel agents.

The invention takes benefit from the growing importance of the electronic ticket servers in the airline industry.

The invention provides a system and method with checks and calculation performed automatically and in real time when a request for issuance or follow-up processing of a ticket, or more generally electronic documents, is received at an ETS. The electronic documents may include Miscellaneous Charge Order (eMCO) or, more generally, electronic Miscellaneous Document (eMD). Follow-up processing includes refund, cancellation/ reinstate and exchange including re-issue of the electronic ticket.

According to one aspect of the present invention there is provided a method of managing a sales quota for the sale of one or more services or products, by an agent for a supplier, to ensure the agent does not surpass a first predetermined limit based on a criterion associated with the sales, the method comprising: measuring the sales of the service or product by the agent during a first predetermined time period; computing associated statistical indicators from the sales measures; and determining a sales quota for the agent to apply during a second predetermined time period, the sales quota being based on the statistical indicators and one or more business rules, to enable management of the sales of the agent without the sales surpassing the first predetermined limit.

According to a second aspect of the present invention there is provided a system for managing a sales quota for the sale of one or more services or products, by an agent for a supplier, to ensure the agent does not surpass a first predetermined limit based on a criterion associated with the sales, the method comprising: a measurement module for measuring the sales of the service or product by the agent during a first predetermined time period; a computer module for computing associated statistical indicators from the sales measures; and for determining a sales quota for the agent to apply during a second predetermined time period, the sales quota being based on the statistical indicators and one or more business rules, to enable management of the sales of the agent without the sales surpassing the predetermined limit.

In one particular aspect of the invention, checking actions are determined and triggered by a coordinating means. These actions result in the issuance or the rejection of the ticket by the server, which may be an electronic ticket server (ETS) of the validating airline in the airline transportation domain.

The present invention provides a number of advantages. The invention provides added value for the airline (or supplier), including, by way of example:
- a "high security" net to the airline allowing detection in real-time of burst ticketing situations;
- prevention of loss of revenue due to fraudulent agent sales, by determining a "maximum" value (or number) of services or products an agent is allowed to sell during a predetermined period;
- creation of a quota for the airline to monitor and manage sales of the agent directly;
- rejection or authorization of an agent sale request by comparing in real-time agent sales' level with agent quota levels ("attained" / "not attained");
- performance of trend analysis on all agent data during a predetermined period, by measuring all agent sales and computing statistical indicators;
- recalculation of each agent's statistical indicators;
- ranking in real-time, or regularly, agents' sales data and provision of reports to airline (off-line or online, in real-time or on regular basis);
- immediate notification to the airline in case of abnormal agent sales trends with the possibility to automatically create an emergency "lock quota" status. This is carried out by an online comparison of agent sales. levels and agents' statistical indicators (burst ticketing detection) according to notification rules set online by the airline. In addition, particularly when the airline has not yet identified "critical" travel agent behavior (i.e. has not previously monitored a new travel agent's sales) or when the airline does not know which quota values to set in terms of number or value.

### Brief description of the drawings

Reference will now be made, by way of example, to the accompanying drawings, in which:
Figure 1 is an e-ticfcet quota management system, in accordance with one embodiment of the present invention, by way of example.
Figure 2 is a graph showing the variation of ticket sales with time, in accordance with one embodiment of the present invention, by way of example.
Figure 3 is a graph showing trend analysis in accordance with one embodiment of the present invention, by way of example.
Figure 4 is a graph showing e-ticket quota airline monitoring versus issuances, in accordance with one embodiment of the present invention, by way of example.
Figure 5 is a graph showing a first airline notification trigger associated with the issuance of e-tickets, in accordance with one embodiment of the present invention, by way of example.
Figure 6 is a graph showing a second airline notification trigger associated with the issuance of e-tickets, in accordance with one embodiment of the present invention, by way of example.
Figure 7 is a graph showing a third airline notification trigger associated with issuance of e-tickets, in accordance with one embodiment of the present invention, by way of example.
Figure 8 is a flow chart showing the method steps, in accordance with one embodiment of the present invention, by way of example.

### Detailed description of the embodiments

The present invention relates to an automated solution for an airline to monitor online travel agency issuance of tickets and to identify abnormalities associated therewith. This is accomplished by means of the main characteristics of: detecting burst ticketing situations in a real-time environment; managing travel agents' electronic sales quota; monitoring the electronic sales of a travel agent; and by reporting trend analysis on travel agent e-sale transactions. Each of these elements will be described in greater detail below. The present invention is designed for any electronic sales environment using an electronic ticket server (hereafter ETS) such as an ETS of a validating airline (in the environment of the airline industry). The only requirement is that in order for the present invention to work, the system described in the present invention must have access to electronic sales data stored and/or received in a validating carrier's ETS.

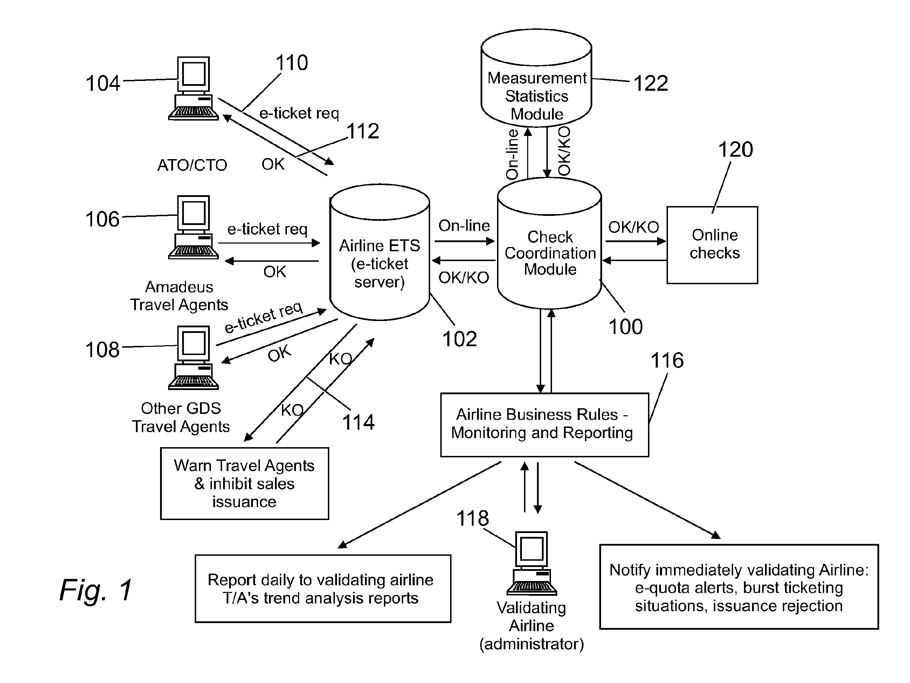

Referring now to figure 1, the e-ticket quota management system will be described. A check coordination module 100 is a central part of the system performing coordination checks between other modules. The ETS 102 is connected via a two way link to a number of agents 104, 106 and 108. These agents may be specific to a certain company or airline (104), or may be travel agents hosted in a different GDS (106, 108), assuming that the ETS hosts the data of the validating carrier. The agent makes a request for an e-ticket issuance (for example 110) and after processing, the ETS may accept the request by means of a message 112. After further processing (as will be described below) if there is an anomaly or abnormal situation the airline ETS may deny the request, for example as shown by arrow 114. Similarly, this may serve merely as a message to the travel agent that sales are above the predetermined quota number or value and that action may subsequently be taken.

The check coordination module 100 is connected to an airline ETS 102 and on reception of an agent sale request from the ETS, dispatches a request to online checks module 120 and to measurements and statistics module 122.

The check coordination module 100 collects the responses derived from the checking actions carried out by module 120 and determines the final reply to be delivered to the ETS. Processing rules are used to instruct the ETS to reject or accept the ticket issuance and/or notify the agent and the airline. If some of the processes are down or take too long, default responses can also be defined by the rules. It should be noted that the behavior of the check coordination module is highly customizable by the rule definitions so that the whole checking process can be accurately and reactively defined by an administrator acting for a supplier or airline.

The check coordination module 100 is also in regular communication with an airline business rules module 116. The airline business rules are generated and updated by an administrator of a validating airline 118. This module stores airline configuration parameters for the system: quota number and/or values and periods, airline notification alert types and thresholds values, electronic sales check eligibility criteria (such as the form of payment [e.g. cash, credit card, check, etc.], type of sales [e.g. all e-tickets, MCO, EMD etc.], burst ticketing detection alerts [which may define the type of alert and alert thresholds etc.). Also, an immediate notification can be issued to the airline when a quota alert situation is reached (for example, a travel agent has almost reached a quota value for the current period) or a burst ticketing situation has been detected (agent sales are "out of predetermined" limits).

In addition, the airline business rules module 116 can trigger the creation of daily trend analysis reports relating to the travel agent sales. These can be dispatched to the validating airline, either offline or online, in any appropriate manner.

The present invention enables an airline to manage risk associated with delegating sales to third parties such as travel agents. The above described system enables the validating airline to be informed in real-time of any burst ticketing situation occurring in a travel agency anywhere in the world. By means of allocation of quotas (in value and/or number) for electronic documents (hereafter called "e-quotas") to an agent, an airline can manage allocation of tickets in a manner which presents less risk in terms of fraudulent behavior. In addition, by generation of a regular report the airline can see behavior trends for all travel agents, which may later be useful in avoiding the airline being owed large amounts of money by particular agents. This can be achieved through the setting of limits and e-quotas, as will be described in greater detail below.

Since June 2008, all tickets available from travel agencies are electronic tickets. As such, there is a requirement for an airline to validate travel agencies' selling and issuing tickets even more closely, to avoid the risk of fraud. This is particularly the case where tickets are not paid for by a credit card form of payment (for example cash). When a buyer pays the sale by credit card, the associated credit card bank acts as a type of "guarantee" for the airline to finally collect any money due. When the buyer pays the agent with a "non-credit card" form of payment (e.g. cash), the airline has to wait for the BSP to invoice the agent for the sale, and then the BSP sends a payment to the airline. (This process is long and in the case of fraudulent agents, the BSP sometimes has no guarantee that the agent will pay the money due).

For an electronic ticket to be issued by a travel agent, the agent connects to a GDS and opens an online link with the validating airline's ETS. A request for a ticket issuance is received on the ETS which makes a real-time decision to either issue the ticket or block the sale using a two way communication with the check module 100. This decision is based on quota parameters stored in online checks module 120 and on the statistical data stored in module 122, as will be described below. This is more particularly the case with regards to the remaining quota value for the travel agent in question. As a consequence, the check coordination module 100 essentially relies on the airline ETS as is a central repository of all electronic transactions on behalf of an airline. These may include all travel agency sales (so called indirect sales), all channels (office, websites, call centers or any other appropriate means), all direct sales (sales issued by an airline's own agents, ATO/CTO, etc.).

The present invention enables supplementary checks during the processing of e-tickets and their issuance, in order to avoid risk and to track risk trends more closely.

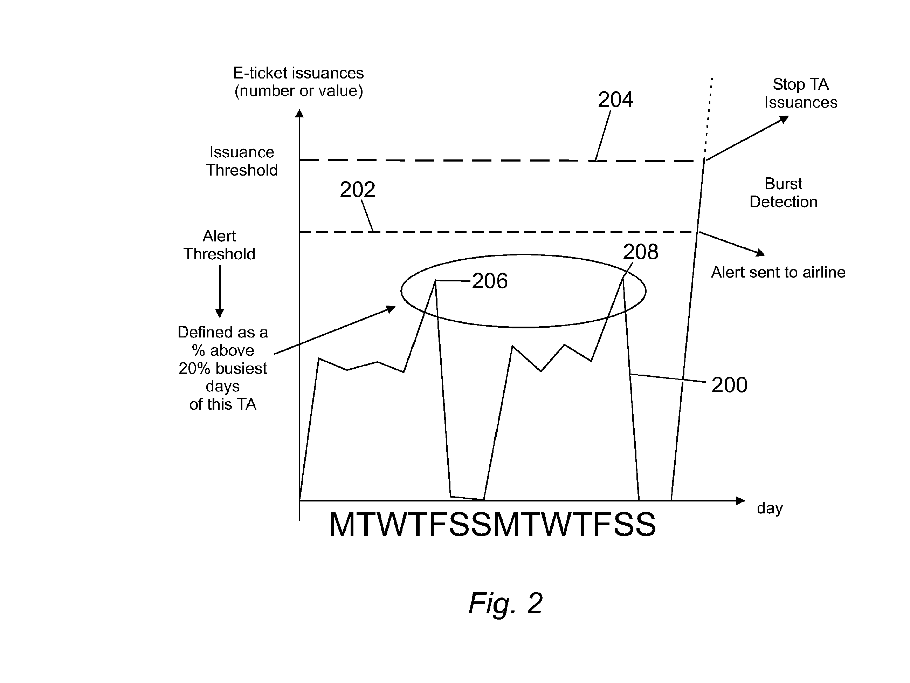

Referring now to figure 2, a graph of tickets issuance against day is presented for a particular agent to show how burst ticketing detection is carried out. The line 200 shows the ticket sales per day for the agent. The agent is not monitored by a quota but the validating airline has set two burst detection alerts: a first alert threshold 202 (notification threshold) is defined as a first percentage above the mean of a travel agent's busiest days. This triggers a first airline notification. A second alert threshold 204 (issuance threshold) is defined as a second percentage above the mean of a travel agent's busiest days, and this triggers a second airline notification which may also inhibit further sales. Line 200 shows two peaks 206 and 208. The peaks represent the busiest days for this travel agent. For example, the first alert threshold is set at 20% above the busiest day of sales for the travel agent. If ticket sales surpass the alert threshold a first alert will be sent to the airline. The airline can then take action depending on the circumstances. If the level of sales reaches the issuance threshold, the airline is immediately notified and ticket issuance may optionally be inhibited on the basis of a decision of airline business rules and online checks modules. The measure of e-ticket issuance can be made in terms of number, value, or any other appropriate metric or criterion.

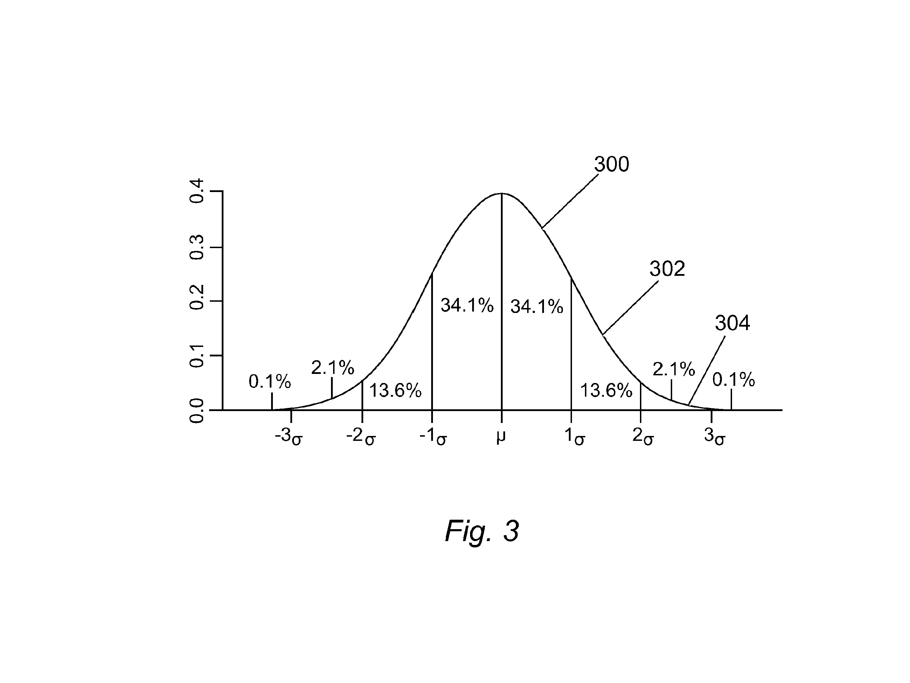

In order to understand the trends of a particular travel agent, the mean (µ) and standard deviation (σ) are calculated on a predetermined period of time and recomputed on a regular basis, for example daily. The statistical values are used to rank the trends of a travel agent and build reports for the airlines. The statistical values are also used for burst ticketing detection, by comparing the level of the agent sales in real-time (when a sales request is received at the ETS) with the statistical values described in Figure 3.

Figure 3 shows a statistical analysis of sales 300. If the value of sales falls in the upper intervals (i.e, greater than mean plus two sigma or three sigma) 302 and 304 this will constitute either an alert threshold or an issuance threshold and the airline will be notified and further sales may be suppressed. The airline has the choice of possible follow-up actions: to create an emergency quota lock for the travel agent which inhibits any further sales for this agent immediately; to let the system automatically reject the sale; or to create an extra e-quota for this travel agent to closely monitor future activity. It may be necessary to measure agent sales data for a minimum significant period (e.g. 30 days having non null values) for the statistics to be reliable.

The description associated with Figures 2 and 3 demonstrates the detection of burst ticketing situations which have led to a high level of fraudulent activity against airlines in the past. The ticketing activities for a dubious travel agent can result in losses of millions of dollars for the airline and the real-time identification of burst ticketing situations combined with immediate notification to the airline can prevent this.

The present invention utilizing the above described daily calculations not only identifies burst ticketing situations, but the airline can also use daily volumes, amounts, values, criteria, etc. to determine e-quotas for new travel agents and manage those of existing agents.

A validating airline can set the electronics sales quota online for a travel agent based on its IATA or number (or any other equivalent agent identifier) for a given period and a given sales number or sales amount or value through a graphical interface, (118 in Figure 1). The quota can be immediately activated, for example by setting a start date. A given period is referred to as the capping period and the given number and/or value is referred to as the capping number or value. The airline may set different types of quotas which may be combined in any appropriate manner. Examples of the type of quota available include a volume quota and a value quota. The volume quota is based on the number of sales (capping number); and the value quota is based preferably on the total sale value issued to the agent (capping amount/value). There may be another financial value (commission amount, fare amount, etc.) or other criteria (route, origin/destination, etc.) which form the basis of the quota. A capping currency is generally associated with an amount. Quotas can also be defined based upon sale type (e.g. e-ticket, eMCO, EMD) or the form of payment for the sale (for example cash, credit cards etc.).

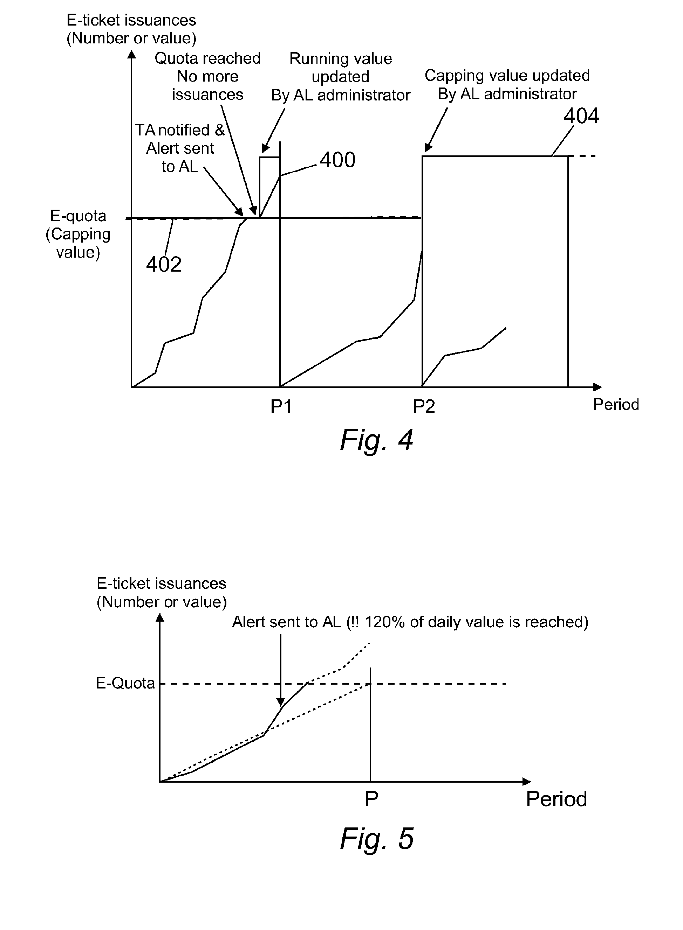

The capping period can also be unspecified, so that a predetermined reference period for quota values is considered as unlimited. Once quota values are reached, sales are inhibited and the airline has to update the running value of the agent quota (remaining number/value for the current period) to unlock further sales, and temporarily may allow the agent to issue tickets until the end of the capping period, as described below with reference to Figure 4. Typically, this kind of update can be performed by an airline administrator in response to an exceptional increase in activity that is justified by the agent or supplier. Nevertheless, ideally the initial capping number and/or capping amount/value will remain unchanged for any subsequent periods. The airline administrator also has the ability to change initial quota parameters thereby updating the capping number, capping value; capping period and any other capping criterion value. These changes will become effective at the beginning of the next capping period.

Referring now to Figure 4, management of travel agency e-sale quotas will now be described. Figure 4 represents a graph of e-ticket issuance, either by number of tickets (volume) or equivalent amount (value) versus period. In the first period P1 the agent sells tickets that reach the e-quota before the end of the period. At this point the travel agent will receive a warning message and the airline will be notified. Since the quota is reached no more tickets will be issued on behalf of the airline by that particular agent. However, as represented by area 400 on the graph, there could be potential sales for the remainder of the period P1, which could indicate the requirement for a higher e-quota. In that case, the airline administrator can exceptionally increase the running value (i.e. remaining volume/amount until the end of the capping period) to allow further sales until the end of the current period. Initial capping values (402) will reapply at the beginning of the next period. The initial e-quota set by the airline is represented by line 402 and this may be updated by an airline administrator to a level as shown at 404. If this is the case, these new quota values will replace the initial ones for the following period. By monitoring the real-time sales of a travel agent the airline can have greater control of the ticket issuance and in guaranteeing that the agent has paid for those tickets.

As previously mentioned, a predetermined limits or alert thresholds can be determined by an airline for any specific travel agent. The manner in which the alert threshold or limit can be defined depends on the choices of the airline and the circumstances involved. Several examples of predetermined limits or alert thresholds will now be described with reference to Figures 5, 6 and 7. The predetermined threshold or limit can be defined in terms of any appropriate variable and can be based on measurements, trends, statistics, or any other appropriate metric.

Figure 5 shows the percentage of daily sales volume (number) or value, as determined by the airline business rules, that can be sold by a particular travel agent. Based on a typical daily value for that travel agent, an alert can be sent to the airline in circumstances where the e-quota exceeds the daily value by a predetermined amount. For example, in this case when 120% of the daily value is reached an alert will be sent to the airline. At this point the airline can then make choices as to how to proceed with this particular agent.

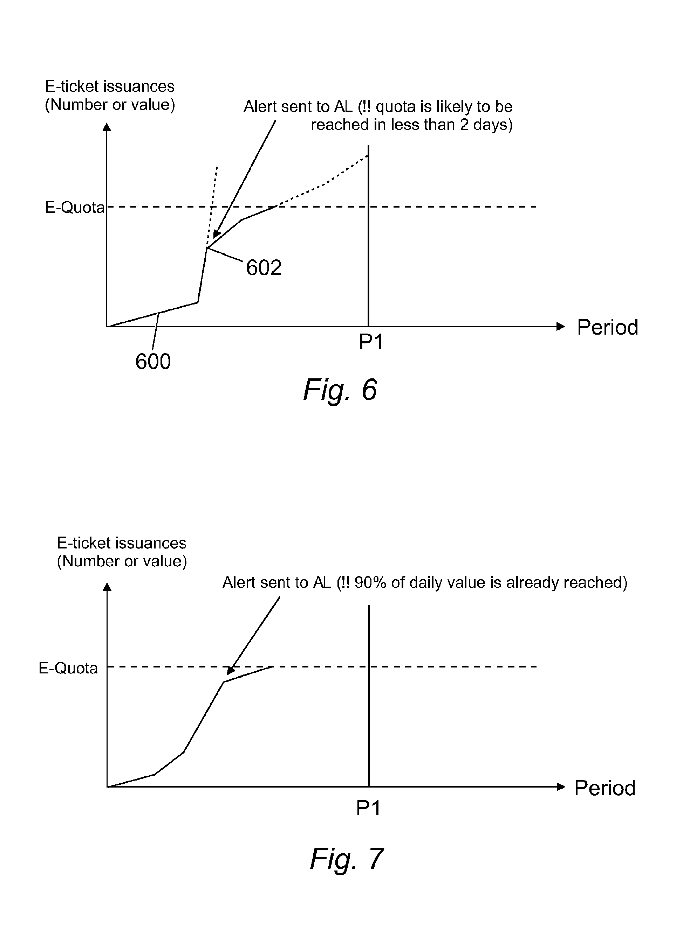

Figure 6 shows an example of monitoring e-quota based on the number of days remaining before the e-quota is likely to be reached. In normal circumstances the e-quota will be reached at the end of period P1. However, as is shown by the line 600 in the graph, this is not the trend that is being measured. Accordingly, an alert will be sent to the airline if the e-quota is likely to be reached in less than a predetermined period based on the length of P1. In this case the example illustrates that the e-quota will be reached in less than two days which is significantly less than period P1 and as such the alert will be sent at point 602.

An example is shown in Figure 7 where a percentage of the e-quota capping value is the measure which triggers the alerts within a predetermined period. For example, if 90% of the e-quota value has already been reached, an alert may be sent to the airline indicating that considerably more tickets are likely to be sold throughout the length of the period than would be predicted by the e-quota. The airline can take appropriate action to either curtail further sales or augment the remaining e-quota for the agent.

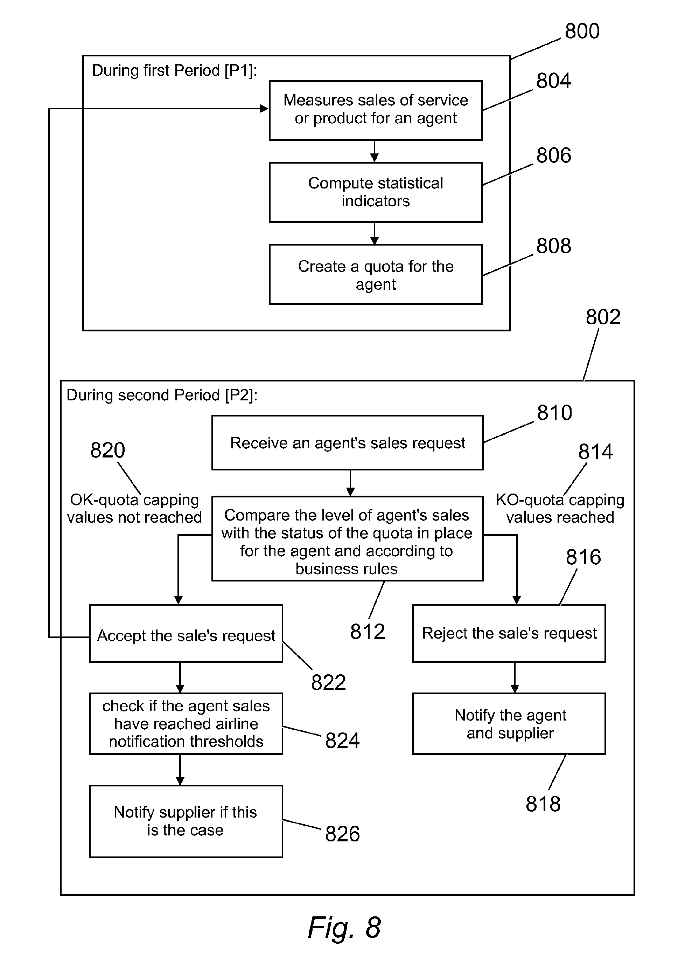

The method steps associated with the present invention will now be described with reference to Figure 8. The steps are essentially split into two separate periods, namely period 1, 800 and period 2, 802. Period 1 and period 2 can occur at different times from one another, or in certain circumstances may occur simultaneously. The duration of periods 1 and 2 can be any predetermined time period as required by the airline or supplier. Either period can be of indefinite length.

Period 1 is associated with the measurement of sales and statistics associated with these measurements. During this period any sales made by an agent are registered and stored in the ETS as illustrated in step 804. Step 806 computes the statistical indicators for each agent based on the measure of sales. This can occur on a regular basis, for example on a daily basis or any other appropriate basis depending on the airline or supplier needs. At step 808, a quota is determined for each agent based on the measurements and statistical indicators. The quota is calculated so as to apply to period 2.

During period 2 a request for an agent sale is received 810. The request is generally received at the ETS which processes the request as described above, with reference to Figure 1. At step 812 a comparison is made between the level of agent sales for period 2 as compared to the remaining/capping values of the quota calculated in step 808; and a set of predetermined business rules which are relevant to the airline or supplier. If the sale is likely to reach the quota for that particular agent (KO, 814) the sale request may be rejected 816. This can then culminate in a notification to the agent and/or supplier at step 818. If the sale does not result in the quota being reached (820) then the sales requests can be accepted, step 822. A subsequent check can further be made to determine whether the agent sales have reached an airline notification threshold determined by the quota and business rules, step 824. If this is the case the supplier or airline will be notified at step 826. If the notification threshold has been met further actions, as described above, may be made by the airline or supplier.

As previously indicated, the present invention enables an airline to more carefully and directly manage electronic sales issuance performed by a travel agency (or ATO/CTO). This guarantees less likelihood of fraudulent practices going unidentified. The airline is also able to make updates online and in real-time; to revise e-quotas based on availability; to determine a level of confidence in agents; to identify exceptional agent activity; and based on many other factors.

One advantage compared to existing systems is that the airline is notified in real-time and can take prompt action (for example, to prevent further agent sales). The prior art does not send any airline notification, and as such the airline is never aware of any possible fraud. The prior art does not provide any airline immediate access to quota determination or updates. This is handled instead through change requests to a GDS and then updated manually such that the whole process can take several days, which is clearly ineffective for fraud scenario detection.

Whenever a travel agent registers a sale this is captured and stored in the ETS. An algorithm is then applied daily to determine trends in ticket issuance in terms of volume or value, and to detect any large variations in sales based on a variation trend analysis. The daily calculations of these statistical parameters can then be used to generate a number of different reports which can be communicated to the airline and used in decision making and planning. One such report may be a general report, which identifies, for example, the top 50 highest trend variations of travel agent sales for a specific day. Another example may be a list of agents which have issued a volume or value of tickets greater than a predetermined percentage (for example, 95% of the expected upper limit, as calculated from the travel agent's busiest days). The general report can be based on the global market or on more discreet markets selected by the airline. For each agent the following information can be provided: a reference, sales volume, sales amount, value, any other useful sale indicator, commission amount, tax amount, fee amount, etc.

A further report including key data such as number and amount of key sales during a day is also provided in reports relative to a particular agent. It enables the airline to set a new e-quota if necessary. The "top 50" trend variations analysis may be performed on any travel agent issuing significant volumes or values of tickets for a particular airline in a given day. The reports and alerts are used to detect any suspicious behavior by a travel agent so as to avoid the risk of substantial losses to the airline. Reports can be provided using a file format or downloaded online through the interface provided by the system to the airline.

It should be noted that the behavior of the check coordination module is highly customizable by the airline business rules so that the whole online checking processing can be accurately and reactively defined by an administrator acting for the supplier. In particular, the check process can be customized to take account of:
- the type of electronic documents (electronic tickets, or electronic miscellaneous documents, for domestic or international itineraries, etc.);
- the point of sale (agent office registering the sale), (travel agent IATA number, other office identifier, or corporate code level, etc.);
- the form of payment used for issuance of the electronic sale (cash only, invoices, all non-credit card types, debit cards, etc.);
- the capping period (number of days, calendar based, etc.);
- the capping values (sale number, sale amounts, commission amount, etc.)
- the airline notification trigger (different kinds of alerts and thresholds can be determined and may coexist).

The business rules set the global behavior and also the behavior of each module and check, and depend on many criteria. For example, the validating airline, type of flights (domestic/international), point of sale, sale type, form of payment, currency and many others.

This invention has been applied to the purchase of tickets in the travel industry environment which extends to all kinds of transportation (train, ferry, car, etc.), as well as hotel booking and other services that can be purchased. However, it will be appreciated that the invention may apply to other environments, for example selling other services and products such as travel and leisure packages, examples of which include the following combinations:
- transportation mode and hotel (flight, hotel; train, car, hotel; and any other combination thereof)
- transportation mode and services (flight, lounge access, etc.)
- hotel and leisure services (hotel and theatre; hotel and restaurant, etc.)
- transportation mode and cruise (flight and cruise including insurance; flight and cruise including visits etc.)
- any other combination of travel, leisure or entertainment product or service.

Furthermore, a person skilled in the art will understand that some or all of the functional entities as well as the processes themselves may be embodied in software, or one or more software-enabled modules and/or devices. Process steps may also be carried out by appropriate and equivalent modules even if these are not identified herein per se.

It will be appreciated that embodiments of this invention may be varied in many different ways and still remain within the intended scope and spirit of the invention.

## Claims

1. A method of managing a sales quota for the sale of one or more services or products, by an agent for a supplier, to ensure the agent does not surpass a first predetermined limit based on a criterion associated with the sales, the method comprising:-
- measuring the sales of the service or product by the agent during a first predetermined time period;
- computing associated statistical indicators from the sales measures;
- determining a sales quota for the agent to apply during a second predetermined time period, the sales quota being based on the statistical indicators and one or more business rules, to enable management of the sales of the agent without the sales surpassing the first predetermined limit.

2. The method of claim 1, further comprising:
- receiving a request for issuance or follow-up processing of a service or product; and
- comparing the level of sales with the sales quota to determine if the predetermined limit has been surpassed.

3. The method of any preceding claim, further comprising computing the levels of sales and sales quotas based on the criterion, such as the value and/or number of sales.

4. The method of any preceding claim, further comprising automatically notifying the supplier if the agent sales reach or approach the first and/or second predetermined limit(s), dependant on the criterion, which second limit equates to fewer sales than the first predetermined limit.

5. The method of claim 4, further comprising generating a notification to the agent that the first and/or second predetermined limit(s) has/have been reached.

6. The method of any preceding claim, further comprising generating a set of business rules to enable the online management of the sales quota by the supplier, such as selecting the type of sales to which the quota is applicable.

7. The method of any preceding claim, further comprising adjusting the agent sales measurement and statistical indicators in real-time after any request for a sale.

8. The method of any preceding claim, further comprising managing the sales activities of a plurality of agents.

9. The method of any preceding claim, further comprising automatically ranking all agent sales in number and/or value, during a third predetermined time period.

10. The method of claim 9, further comprising automatically generating a report for the supplier comprising the ranking of the or each agents' sales, wherein the report includes the numbers of sales, the values of sales and associated statistical indicators during a fourth predetermined time period, to facilitate quota management by the supplier.

11. The method of claim 10, further comprising automatically sending the reports to the supplier on a regular basis, by means of transmission means such as electronic means, file transfer and/or online web services.

12. The method of any preceding claim, further comprising defining the predetermined limit from the list including a percentage of day sales; a period remaining for achieving the quota and/or a percentage value of the quota.

13. A computer program comprising instructions for carrying out the method of any of claims 1 to 12, when said computer program is executed on a programmable apparatus.

14. A system for managing a sales quota for the sale of one or more services or products, by an agent for a supplier, to ensure the agent does not surpass a first predetermined limit based on a criterion associated with the sales, the system comprising:-
- a measurement module for measuring the sales of the service or product by the agent during a first predetermined time period;
- a computer module for computing associated statistical indicators from the sales measures; and for determining a sales quota for the agent to apply during a second predetermined time period, the sales quota being based on the statistical indicators and one or more business rules, to enable management of the sales of the agent without the sales surpassing the first predetermined limit.
